Europäisches Patentamt

European Patent Office

Office européen des brevets

(11) Publication number: **0 257 805**
A2

# (12) EUROPEAN PATENT APPLICATION

(21) Application number: 87306611.2

(22) Date of filing: 27.07.87

(51) Int. Cl.4: **G06K 9/18** , G09F 7/16

(30) Priority: 01.08.86 JP 182336/86

(43) Date of publication of application:
02.03.88 Bulletin 88/09

(84) Designated Contracting States:
DE FR GB

(71) Applicant: SUMITOMO RUBBER INDUSTRIES LIMITED
No. 1-1, Tsutsui-cho 1-chome
Chuo-ku Kobe-shi Hyogo 651(JP)

(72) Inventor: Kishigami, Yasunari
377-3, Hiratsu Yoneda-cho
Hyogo-ken(JP)
Inventor: Arita, Masakazu
1192-285 Shinzaike Horaoka-cho
Kakogawa-shi Hyogo-ken(JP)
Inventor: Koide, Teruo
26-81 Aza Kamigaike Oaza Miyoshi
Miyoshi-cho
Nishikamo Aichi-ken(JP)

(74) Representative: Stewart, Charles Geoffrey
SP TYRES UK LIMITED Tyre Technical
Division
Fort Dunlop Erdington Birmingham B24
9QT(GB)

(54) Identification mark & method and apparatus for reading the same.

(57) An identification mark for a metal, rubber, plastic or the like article to be identified together with a method of reading the identification mark and a device for reading the mark. The mark comprises a combination of a priority of segments from a preselected matrix of standard segments and the device for reading the mark comprises a set of sensors, one for each of the standard segment positions and completed means for comparing the optical signals received from the sensors to read the mark.

FIG. 1

## Identification Mark and Method and Apparatus for Reading the same

This invention relates to identification marks such as letters numerals or the like composed of a combination of a plurality of segments and selectively formed on a surface of an article made of rubber, plastics, metal or the like, and a method and device for reading the same.

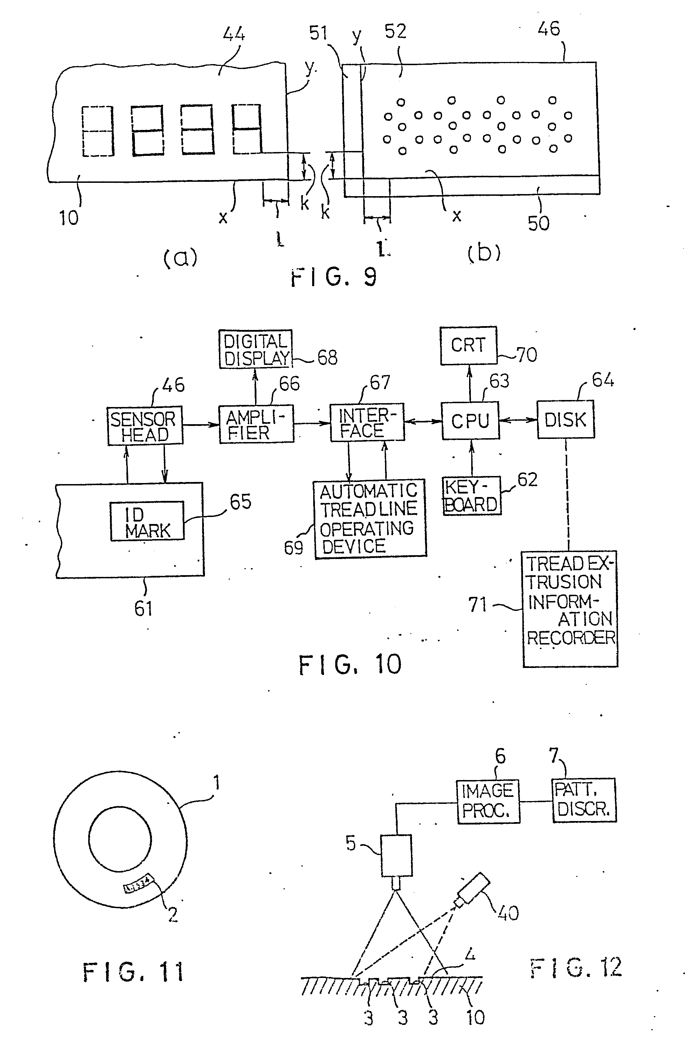

Japanese patent publication No. 50-63842 discloses a prior art method which has been adopted for optically reading identification marks such as letters or numerals formed on a surface or an article made of rubber plastics, metal or the like. In this method a mark having roughened a surface or a polished surface on a rubber tyre is illuminated by a light source 40 shown in Figure 12 and read by a camera 5. In Figure 12, 10 denotes an enlarged sectional view of a part of the mark which comprises normal letters or numbers. Thus the mark is illuminated by the light source 40 and the camera 5 reads all parts of the mark from the difference in the reflected light quantity and sends a corresponding electric signal to an image processing system 6. The image processing system 6 processes the electric signals sent from the camera 5 and sends them to a pattern discriminating device 7. The pattern discriminating device 7 judges whether or not the content of the mark read by the camera 5 coincides with a preset pattern in its memory and sends a command to the next processing stage based upon the result of this comparison.

Alternatively bar codes printed or embossed on a surface of an article may be used and may be read by a bar code reader or displacement meter using a laser beam.

However, in a reading method using a camera as described above, conditions for accurately reading a mark, such as angle and brightness of illumination, are so severe that there may be erroneous reading unless all the condition are satisfied. Moreover it is also a disadvantage in that the image processing system and the pattern discriminating device are expensive and software used in the pattern discriminating device is also expensive. On the other hand, the bar code is easily spoiled or damaged and only a little mark or stain can cause erroneous readings. The bar code also has an unavoidable disadvantage in that a person cannot readily read out its content by his eyes.

Accordingly, an object of this invention is to provide a novel identification mark comprising visually readable letters or numbers which are readable by a simple economical reading device.

Another object of this invention is to provide a novel and economical method for accurately reading the novel mark of this invention.

A further object of this invention is to provide a novel and economical device for accurately reading the mark of this invention.

According to one aspect of the present invention an identification mark provided formed on an article to be identified which comprises characters, letters, or numerals each of which is characterised by being composed by a combination of a plurality of segments from a preselected matrix of standard segments. Preferably the segments may be depressed or raised from the surface of the main article which is the background thereof. The segments may have different roughness to the background area and/or may be painted with a material having different optical reflectivity to the background.

Preferably the identification marks have adjacent to it, a guide means which allows the sensing head to be positioned over the identification mark accurately.

Another aspect of the invention provides a method of reading identification marks of the type described above which comprises positioning a plurality of sensors facing the predetermined positions of the segment matrix positions and recognising the content of the mark based upon the signals provided by the sensors in response to the strength of light reflected from the corresponding positions.

A further aspect of the invention provides an identification mark reading device comprising a combination of a plurality of segment positions each having a sensor head in the correct position and means responsive to signals from the said sensors for recognising the content of the identification mark.

Further aspects to the present invention will become apparent from the following description by way of example only of some embodiments of the invention in conjunction with the diagrammatic drawings in which

Figure 1(a) is a schematic view representing an embodiment of the mark of this invention including letters and numbers each composed of a combination of seven segments;

Figure 1(b) is a schematic view showing enlarged one configuration of the mark of Figure 1-(a);

Figure 2(a) is a schematic view representing another embodiment of the mark of this invention including letters and numbers composed of a combination of sixteen segments each;

Figure 2(b) is a schematic view showing enlarged the configuration of the mark of Figure 2-(a);

Figure 3 is a plan view showing a sensor arrangement for an apparatus to provide a mark reading device of this invention;

Figure 4 is a plan view showing a second sensor head arrangement.

Figure 5 is a part sectioned side view showing a first example of a sensor arrangement over a character or number;

Figure 6 is a part sectional side view showing s second position position of the sensors in Fig 5;

Figures 7(a) and 7(b) are plan and perspective views representing a first embodiment of positioning means for the identification mark of this invention and the sensor head of this invention;

Figure 8(a) and 8(b) are plan and sectional side views representing a second embodiment of positioning means for the identification mark of this invention and the sensor head of this invention.

Figures 9(a) and 9(b) are top and bottom views representing a third embodiment of positioning means for the identification mark of this invention and the sensor of this invention;

Figure 10 is a schematic block diagram illustrative of an operation of the identification mark reading device according to this invention used in a tyre manufacturing process;

Figure 11 is a plan view showing a rubber tyre comprising an identification mark according to the invention and

Figure 12 is a schematic diagram representing a prior art device for optically reading identification marks.

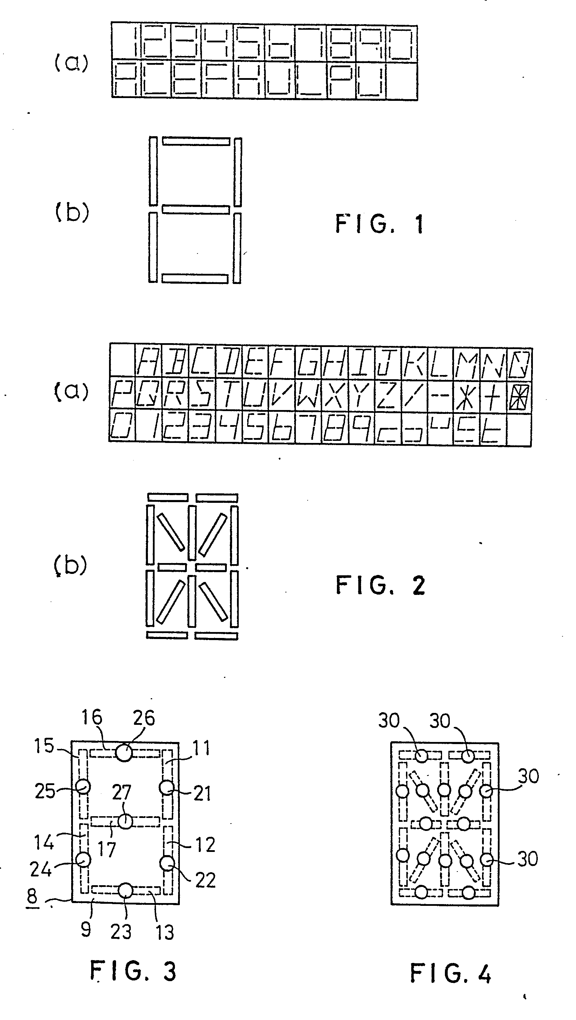

Figures 1(a) and (b) show a seven segment tyre identification mark according to this invention which can indicate alphabetic characters A,C,E,F,H,J,L,P and U in addition to all ten numerals. Figures 2(a) and (b) show a sixteen segment tyre identification mark according to this invention which can indicate all alphabetic characters and some signs such as +, - and * in addition to the ten numerals.

In both cases the segments are formed by depressed or raised strips of material or by polished and roughened surfaces, for example, having different reflective values, as will be described later.

Each segment position of the seven or sixteen position patterns is predetermined and so by choosing whether or not to provide each segment position it is possible to create the required letter or numeral. Thus for each segment if a part is present then the whole standard segment is present.

Figure 3 is a typical reading unit or sensor head used in the identification mark reading device according to this invention. A sensor head 8, used to read a seven segment tyre identification mark as shown in broken lines, comprises a body 9 having open sensors 21 to 27 arranged one to face respectively the middle of each one of the 7 basic segment positions 11 to 17. Figure 4 is a similar view of a sensor head for a sixteen segment tyre identification mark and in the case of Figure 3 16 sensors 30 are disposed each one facing a respective one of the sixteen segment positions.

The sensors are preferably photoelectric switches but they may be non-contact switches of eddy current type when the article is metallic, The following description will be made for example in conjunction with a reading device for seven segment tyre identification mark.

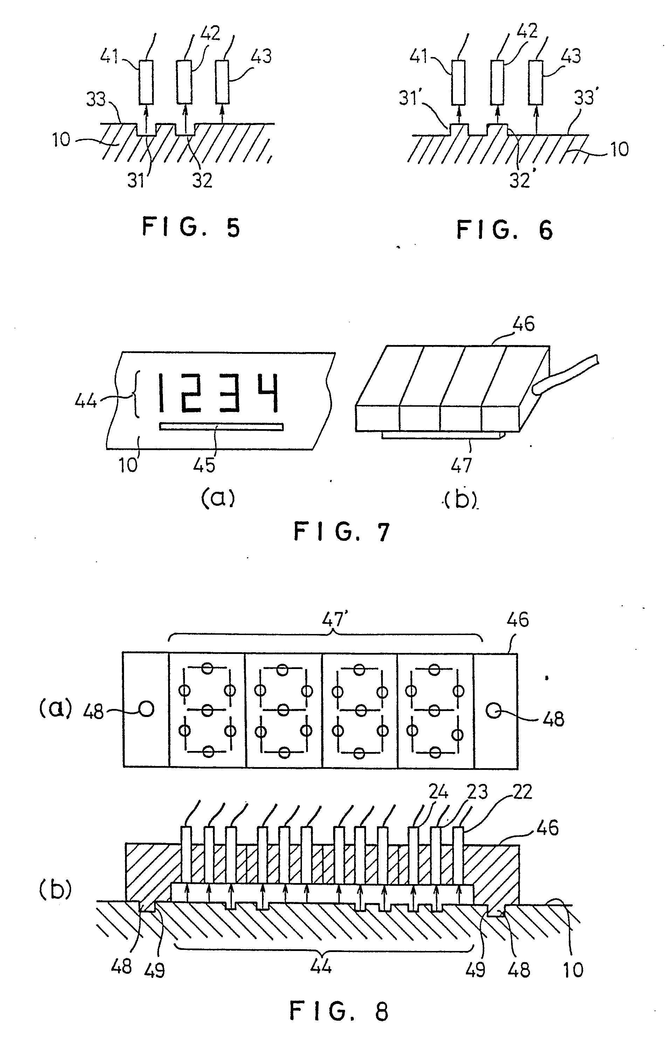

Figure 5 is a sectional view showing a first of two segment reading positions. The letters or numbers are formed by depressed or lowered regions 31 and 32 and a level region arranged to give the segments forming the mark. Sensors 41, 42 and 43 are positioned to face their respective segment positions. In this case, the light reflected from the depressed positions 31 and 32 into the sensors 41 and 42 is lower in strength than that reflected from the level surface 33 into the sensor 43 and the sensitivity of each sensor is preadjusted so that the sensors 41 and 42 facing the depressions indicate the presence of a depressed segment by being shut OFF and the sensor 34 facing the surface 33 in the third segment position is switched ON by the brighter reflected light.

Figure 6 is a sectional view of a device reading a letter formed by raised regions or segments 31,32 and a level surface 33 on a product 10 to form the segments standing for a mark. In this case, the sensitivities of the sensors are adjusted so that the sensors 41 and 42 facing the projections to indicate presence of segment are switched ON by the bright reflected light and the sensor 43 facing the surface 33 i.e. the third segment position is switched OFF.

In the embodiment shown in Figures 3 and 5 when the segments at the segment exist positions 11 and 12 for example, the sensors 21 and 22 facing these segments are switched OFF and the other sensors 23 to 27 facing other segment positions 13 and 16 are switched ON. Thus, the sensor head can read for example a numeral "1".

In the mark reading device of this invention, the sensors attached to the sensor head must accurately face the respective basic segment positions i.e. the segments forming a mark. It is necessary to keep accurate alignment of the positions of sensor head and the identification mark. In a first example positioning means are provided for this alignment by the alignment means shown in Figures 7 (a) and (b). A mark 44 composed of numerals for example according to this invention is formed in a predetermined position on a surface of a product 10 and a positioning groove 45 is formed below the mark 44.

A sensor head 46 is provided with sensors (not shown) arranged as shown in Figure 3 and a key 47 which can fit in the groove 45 is accurately positioned near to the sensors. Thus accurate alignment of the positions of the sensors of the sensor head 46 and the respective segments of the mark 44 is obtained by inserting the key 47 into the positioning groove 45.

In a second example of alignment means for positioning the sensor head 46 shown in Figures 8-(a) and (b), two positioning pins 48 project from the bottom surface of a sensor arrangement 47 one on either end, and before reading the mark 44, the pins 48 are engaged in correspondingly positioned holes 49 formed in the article 10 one on either side of the mark 44. Thus, the sensors 22, 23 and 24 are aligned accurately with the respective segment positions of the mark, thereby enabling detection of reflected light from these positions.

The alternative embodiment of positioning means shown in Figures 9(a) and (b) may be used when the mark 44 if formed always in a predetermined position on the product 10. More particularly, as shown, the bottom line of the mark 44 is spaced from the bottom edge "x" of the product 10 by distance k and the right end of the mark is spaced from the right edge "y" of the product by a distance. In this case a sensor head 46 shown in Figure 9(h) is used and an L shaped projecting guide walls 50 and 51 having corresponding inner guide surfaces "x" and "y" are formed at a corner of the sensor head 46. Sensors 52 are positioned by reference to the distance "k" and "l" from the surfaces "x" and "y". At the time of reading the mark 44, alignment of the sensors with the corresponding segment positions can be obtained easily by putting the reflective edges x & y on the product and those in the guide in contact.

In the identification mark composed of grooves raised portions or segments or this invention, it is preferable to paint the depressed portion with low reflection (black) material or the raised depressed portion with high reflection (white) material. This will provide a greater difference in reflectivity between presence and absence of segment forming a mark at segment positions and, therefore, it becomes possible to make the depressed portion shallower or the raised portion lower. A shallower depressed portion will facilitate removal of dust accumulated in this portion, thereby contributing to prevention of erroneous reading. Without use of such depressed or raised segments the segments of the mark may be formed simply by painting a material having different optical reflectivity from the background (such as a white mark on a black background). The mark may be formed by lustrous and rough surfaces i.e. reflecting and non reflecting surfaces.

Referring now to Figure 10, a die plate selecting system used in a tread extrusion line for a tyre manufacturing process, will be described as an example of a use of the identification mark according to this invention. In the case of changing the tyre size for example, the following steps are sequentially executed.

(1) A die plate 61 having a number formed by a combination of segments relating to the tyre size to be changed is identified and selected and temporarily placed near the extruder together with other necessary parts for extrusion..

(2) A code number of the tyre size to be changed is input to a central processing unit, (CPU) 63 by a keyboard 62.

(3) The CPU 63 searches in a memory disc 64 for a die plate number corresponding to the code number of this tyre size.

(4) Next, a sensor head 46 used in the reading device of this invention is positioned on the die plate number 65 of the die plate 61 to read this die plate number.

(5) A on-off signal from the sensor head 46 indicative of the content of the die plate number 65 is amplified by an amplifier 66 and supplied through an interface 67 to the CPU 63. At the same time, the content is displayed by a digital display device 68.

(6) The CPU collates to check the die plate number 65 of the die plate 61 ready by the sensor head 46 with the die plate number searched from the disc 64. When both die plate numbers coincide, the CPU provides a coincidence signal through the interface 67 to an automatic tread line operating device 69 to start the line using the die plate 61. When both die plate numbers are different, a discordance single is provided to the automatic tread line operating device 69 to stop the line and give an alarm.

(8) When both die plates numbers discord, the die plate 61 is exchanged and the same steps are repeated to read and recheck the mark on the die plate. A cathode ray tube 70 displays the searched die plate number and the result of collation and a tread extrusion recording device 71 records various informations needed in the tread extrusion process.

It should be noted that the above description has been made merely for illustrative purpose and various modifications and changes can be made by those skilled in the art within the scope of this invention as defined in the appended claims. It should be understood that the inventive identification mark can be applied also to any product in any industrial field.

According to this invention, the strength of reflected light varies in response to presence and absence of their segments which form the character number etc of the identification mark and, therefore, it is possible to read the characters by numerals etc recognising the presence or absence of the signals supplied from respective sensors, that is either the signal supplied from each sensor is ON or OFF signal and there us no need to use complicated signal processing circuits nor software for pattern discrimination, making the apparatus cost much less than the conventional apparatus using cameras and image processing circuits. Unlike the conventional bar-code system which necessitates the use of an invisible mark in addition to the bar code only one mark is enough in this invention, which makes the method of this invention less expensive.

As the mark of this invention is visually when a extrusion line stopped by a disaccordance signal from the device of this invention, it is easy to find out whether it is due to erroneous reading or to selection of wrong die plate.

Unlike conventional bar codes comprising a combination of wide and narrow codes all the segments forming a mark of this invention are composed of the same wide segments which makes the mark of this invention much less affected by contamination to avoid miss-reading.

Moreover, it is possible to display the mark on the display device as occasion demands by the signals supplied from respective sensors and to easily discriminate coincidence and non-coincidence with a preset content.

## Claims

1 An identification mark formed on an article to be identified, comprising characters, numerals, etc each characterised by being composed of a combination of a plurality of segments from a preselected matrix of standard segments (11 to 17)

2 An identification mark according to claim 1, characterised in that the said segments (11-17) are depressed or raised from the background thereof.

3 An identification mark according to Claim 1 or 2 characterised by said segments (11-17) differing in roughness from the background thereof.

4. An identification mark according to Claim 1 2 or 3 characterised in that said segments (11-17) are painted with a material having different optical reflectivity from the background thereof.

An identification mark according to any one of claims 1-4 characterised in that the said mark is adjacent to guide means (45,48) provided on said article to be coupled to positioning mean of a corresponding mark reading device for positioning said reading device.

6 A method of reading an identification mark formed on an article to be identified, comprising letters or numerals etc each being composed of a combination of a plurality of segments from a preselected matrix of standard segments (11-17) characterised by the steps of placing a plurality of sensors (41,43,22) facing predetermined segment positions, and recognizing the content of said marks based upon the signals provided by said sensors, in response to the strength of light reflected respectively from said corresponding segment positions.

7 An identification mark reading device said mark comprising letters or numerals etc each being composed of a combination of a plurality of segments characterised by said device comprising a sensor head (46) having a plurality of sensors (21) respectively corresponding to segment positions for recognising the content of said identification mark.

8 A device according to Claim 7, device comprises positioning means (47,48) to be coupled to guide means provided near said mark for aligning the positions of said mark and sensor head (46).

9 An identification mark formed on a metallic, rubber, plastic or like article to be identified, which comprises characters numerals etc composed of a plurality of segments selectively formed on predetermined segment positions on the surface of said article, which are visually readable. The mark is also readable by an inventive reading device comprising a sensor head having a plurality of sensors arranged to face respectively segment and provide on-off signals in response to the presence of said positions on the surface of said article and means responsive to the on-off signals for recognising the content of the mark.

(a)

(b)

FIG. 1

(a)

(b)

FIG. 2

FIG. 3

FIG. 4

FIG. 5

FIG. 6

(a)

(b)

FIG. 7

(a)

(b)

FIG. 8

FIG. 9

FIG. 10

FIG. 11

FIG. 12